# EUROPÄISCHE PATENTSCHRIFT

(11) **EP 1 421 430 B1**
(45) Veröffentlichungstag und Bekanntmachung des Hinweises auf die Patenterteilung: **27.12.2006**
(21) Anmeldenummer: 02767075.1
(22) Anmeldetag: 31.07.2002
(51) Int. Cl.: G02B 26/10, B60Q 1/52, B60K 31/00, G01S 13/93

(54) **ABTASTVORRICHTUNG**
SCANNING DEVICE
DISPOSITIF DE BALAYAGE

(30) Priorität: 31.08.2001 DE 10142425
(43) Veröffentlichungstag der Anmeldung: 26.05.2004
(73) Patentinhaber: Automotive Distance Control Systems GmbH, 88131 Lindau (DE)
(72) Erfinder: SCHANZ, Holger, 88131 Lindau a.B. (DE)
(74) Vertreter: Graf, Ulrich
(86) Internationale Anmeldenummer: PCT/DE2002/002864
(87) Internationale Veröffentlichungsnummer: WO 2003/027752

(56) Entgegenhaltungen:
- EP-A- 0 138 646
- DE-A- 4 115 747
- DE-A- 4 239 061
- DE-A- 19 530 281

## Beschreibung

Die Erfindung betrifft eine Abtastvorrichtung gemäß dem Oberbegriff des Patentanspruchs 1.

Eine derartige Abtastvorrichtung ist beispielsweise aus der DE 41 15 747 C2 bekannt. Die bekannte Vorrichtung umfasst eine Strahlungsquelle, ein rotierbares planparalleles Prisma und eine Linsenvorrichtung. Die Strahlungsquelle sendet einen Lichtstrahl aus, der das Prisma durchdringt und der anschließend über die Linsenvorrichtung auf eine abzutastende Szene abgebildet wird. Der Lichtstrahl wird dabei an zwei Brechungsebenen des Prismas gebrochen. Aufgrund der Parallelität dieser Brechungsebenen sind der in das Prisma eintretende Lichtstrahl und der aus dem Prisma austretende Lichtstrahl um einen von der Winkellage des Prismas abhängigen Wert gegeneinander parallel versetzt. Durch Rotation des Prismas wird dieser Versatz variiert und der Lichtstrahl somit über die abzutastende Szene bewegt.

Der wesentliche Nachteil dieser Vorrichtung besteht darin, dass die Länge des Weges, den der Lichtstrahl von der Strahlungsquelle zur Linsenvorrichtung durchläuft, von der Winkellage des Prismas abhängig ist, so dass der Lichtstrahl während de Abtastvorgangs durch die Rotation des Prismas defokussiert wird.

Der Erfindung liegt daher die Aufgabe zugrundem, eine Vorrichtung gemäß dem Oberbegriff des Patentanspruchs 1 anzugeben, bei der der Lichtstrahl während des Abtastvorgangs nicht oder möglichst wenig defokussiert wird.

Die Aufgabe wird durch die Merkmale des Patentanspruchs 1 gelöst. Vorteilhafte Ausgestaltungen und Weiterbildungen ergeben sich aus den weiteren Ansprüchen.

Die erfindungsgemäße Abtastvorrichtung umfasst einen Sendeteil, der seinerseits eine Strahlungsquelle zum Aussenden eines Lichtstrahls, ein rotierbares Prisma zum Ablenken des Lichtstrahls und eine Linsenvorrichtung zur Abbildung des abgelenkten Lichtstahls auf eine abzutastende Szene aufweist, wobei der Lichtstrahl derart gebündelt ist, dass er die Linsenvorrichtung in einem von der Winkellage des Prismas abhängigen Linsenabschnitt durchdringt, und wobei die Linsenvorrichtung Linsenabschnitte mit unterschiedlichen Brennweiten aufweist, die jeweils derart gewählt sind, dass die Strahlungsquelle jeweils im Brennpunkt desjenigen Linsenabschnitts liegt, durch den der Lichtstrahl hindurchgeht.

Vorzugsweise ist die Strahlungsquelle bezüglich dem Prisma derart positioniert, dass die Ablenkung des Lichtstrahl im Prisma durch Totalreflexion erfolgt. Die Linsenvorrichtung ist vorzugsweise als Fresnellinse und die Strahlungsquelle vorzugsweise als Laserdiode, insbesondere als Infrarot-Laserdiode, ausgeführt.

In einer vorteilhaften Weiterbildung weist die Abtastvorrichtung einen Empfangsteil auf, der seinerseits einen Photodetektor, ein dem Prisma des Sendeteils gleichartiges weiteres Prisma und eine der Linsenvorrichtung des Sendeteils gleichartige weitere Linsenvorrichtung aufweist. Die Prismen des Sende- und Empfangsteils werden dabei synchron zueinander um die gleiche Rotationsachse oder um zueinander parallele Rotationsachsen rotiert. Die Position des Photodetektors bezüglich dem weiteren Prisma und der weiteren Linsenvorrichtung entspricht der Position der Strahlungsquelle bezüglich dem Prisma und der Linsenvorrichtung des Sendeteils. Der Photodetektor ist somit derart positioniert, dass ein aus dem Lichtstahl resultierender Reflexionsstrahl über die weitere Linsenvorrichtung und das weitere Prisma auf ihn abgebildet wird.

Die erfindungsgemäße Abtastvorrichtung eignet sich bestens zur Herstellung eines Abstandsradars für Kraftfahrzeuge. Ein derartiger Abstandsradar kann in einem Abstandsregelsystem zur Ermittlung des Abstands zu einem vorausfahrenden Fahrzeug eingesetzt werden. Die Abstandsermittlung beruht dabei auf der Ermittlung der Singanlaufzeit (Echozeit) des ausgesendeten und reflektieren Lichtstrahls.

Die Erfindung wird nachfolgend anhand von Ausführungsbeispielen und Figuren näher erläutert. Es zeigen:
- Figur 1: eine Prinzipdarstellung eines Sendeteils einer optischen Abtastvorrichtung,
- Figur 2: eine Prinzipdarstellung einer optischen Abtastvorrichtung mit einem Sendeteil gemäß Figur 1.

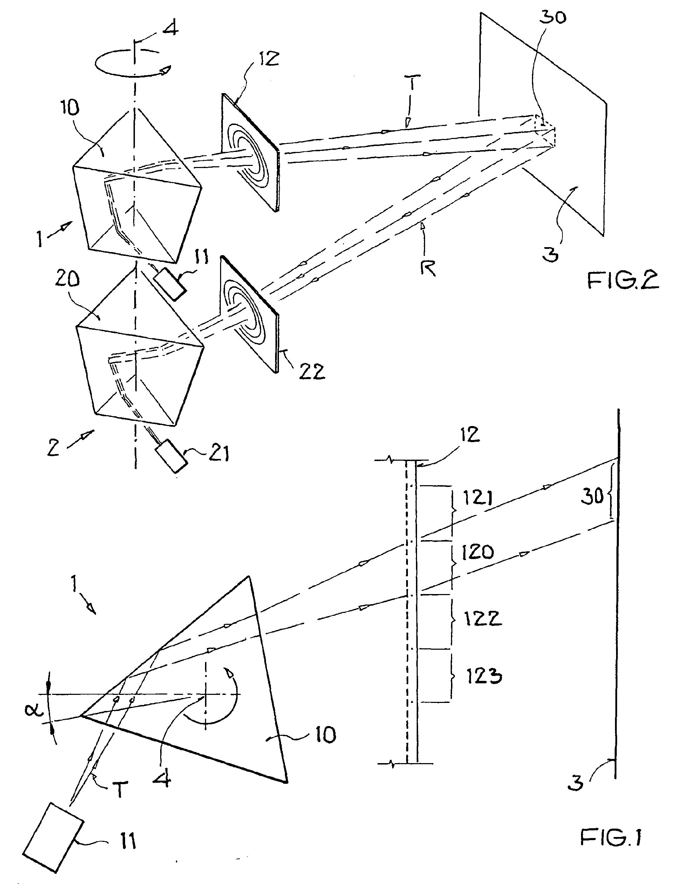

Gemäß Figur 1 umfasst der Sendeteil einer optischen Abtastvorrichtung eine, beispielsweise als Infrarot-Laserdiode ausgeführte Strahlungsquelle 11, ein Prisma 10 mit dreieckigem Querschnitt und eine als Fresnellinse ausgeführte Linsenvorrichtung 12. Die Strahlungsquelle 11 sendet von einer bezüglich dem Prisma 10 und der Linsenvorrichtung 12 festen Position aus einen Lichtstrahl T in Richtung des Prismas 10 aus. Der Lichtstrahl T dringt dabei durch eine Eintrittsfläche in das Prisma 10 ein, wird im Prisma 10 an einer Seitenwand des Prismas 10 durch Totalreflexion abgelenkt und tritt anschließend durch eine Austrittsfläche aus dem Prisma 10 wieder aus. Beim Durchdringen der Eintritt- bzw. Austrittsfläche wird der Lichtstrahl T ggf. gebrochen. Nach dem Austritt aus dem Prisma 10 wird der Lichtstrahl T über die Linsenvorrichtung 12 auf eine abzutastende Szene 3 abgebildet, d. h. die Strahlungsquelle 11 beleuchtet einen abgegrenzten Bereich 30 der Szene 3. Der Lichtstrahl T ist dabei derart gebündelt, dass er nur auf einen Linsenabschnitt 120, d. h. nur auf einen Teilbereich der Linsenvorrichtung 12 auftrifft und die Linsenvorrichtung 12 nur in diesem Linsenabschnitt 120 durchdringt.

Während des Abtastvorgangs wird das Prisma 10 rotiert. Hierdurch ändert sich die der Reflexionswinkel des Lichtstrahls im Inneren des Prisma 10, was zu einer Änderung der Auslenkung des Lichtstrahls T führt. Aufgrund dieser Änderung wird der Lichtstrahl T über Linsenvorrichtung 12 und über die Szene 3 bewegt. Der Lage des von Lichtstrahl T durchdrungenen Linsenabschnitts 120 hängt somit von der Winkellage α des Prismas 10 ab.

Die Linsenvorrichtung 12 weist Linsenabschnitte 120, 121, 122, 123 mit unterschiedlichen Brennweiten auf. Die Brennweiten der einzelnen Linsenabschnitte 120, 121, 122, 123 sind dabei derart gewählt, dass die Strahlungsquelle 11 jeweils im Brennpunkt des vom Lichtstahl T durchdrungenen Linsenabschnitts 120 bzw. 121 bzw. 122 bzw. 123 liegt. Bei der in Figur 1 dargestellten Winkellage α liegt die Strahlungsquelle 11 somit im Brennpunkt des Linsenabschnitts 120. Durch die unterschiedlichen Brennweiten der einzelnen Linsenabschnitte erreicht man, dass der Lichtstrahl T trotz der von der Winkellage α abhängigen Länge des Lichtweges zwischen der Strahlungsquelle 11 und der Linsenvorrichtung 12 auch bei einer Änderung der Winkellage α fokussiert bleibt.

Gemäß Figur 2 weist die Abtastvorrichtung neben dem Sendeteil 1 auch einen Empfangsteil 2 auf, der analog zum Sendeteil 1 aufgebaut ist. So weist der Empfangsteil 2 ein dem Prisma 10 des Sendeteils 1 entsprechendes weiteres Prisma 20 und eine der Linsenvorrichtung 12 des Sendeteils 1 entsprechende weitere Linsenvorrichtung 22 auf. Die Prismen 10, 20 und die Linsenvorrichtungen 12, 22 sind dabei jeweils gleich ausgeführt. Der Unterschied zwischen dem Sendeteil 1 und dem Empfangsteil 2 besteht darin, dass der Empfangsteil 2 statt der Strahlungsquelle 11 einen beispielsweise als PiN-Diode ausgeführten Photodetektor 21 aufweist. Die relative Lage des Photodetektors 21 bezüglich dem Prisma 20 und der Linsenvorrichtung 22 entspricht dabei der relativen Lage der Strahlungsquelle 11 bezüglich dem Prisma 10 und der Linsenvorrichtung 12.

Die Prismen 10, 20 werden synchron zueinander rotiert. Die Rotation kann dabei um die gleiche Rotationsachse 4 oder um zueinander parallele Rotationsachsen erfolgen. Damit detektiert der Photodetektor 21 den am Bereich 30 der Szene 3 reflektierten Anteil des von der Strahlungsquelle 11 ausgesendeten Lichtstrahls T. Dieser reflektierte Anteil wird als Reflexionsstrahl R auf den Photodetektor 21 fokussiert. Die Fokussierung ist auch bei einer Änderung der Winkellage α der Prismen 10, 20 und somit auch bei einer Änderung der Position des von der Strahlungsquelle 11 beleuchteten Bereichs 30 gewährleistet, da der Photodetektor 21 aufgrund der gleichen Ausführung der Linsenvorrichtung 12, 22 jeweils im Brennpunkt desjenigen Linsenabschnitts liegt, durch den der auf den Photodetektor 21 auftreffende Reflexionsstrahl R hindurchgeht.

Durch die Rotation der Prismen 10, 20 wird der Lichtstrahl T quer zur Rotationsachse, im vorliegenden Ausführungsbeispiel also horizontal über die Szene 3 bewegt. Die Prismen 10, 20 können Seitenflächen aufweisen, die gegenüber ihrer Rotationsachse geneigt sind. Damit erreicht man zusätzlich eine Auslenkung des Lichtstrahls T in Richtung der Rotationsachse 4, im vorliegenden Ausführungsbeispiel also eine vertikale Auslenkung. Die Szene 3 wird dann zweidimensional in mehreren Zeilen abgetastet.

Durch Auswertung der Signallaufzeit des als Lichtstrahl T ausgesendeten und als Reflexionsstrahl R reflektierten Signals lässt sich dann der Abstand zwischen der Abtastvorrichtung und dem Ort, an dem der Lichtstrahl T reflektiert wird, ermitteln.

Die Abtastvorrichtung eignet sich daher bestens zum Einsatz in einem System zur Unterstützung des Fahrers eines Kraftfahrzeugs, insbesondere in einem Abstandsregelsystem für Kraftfahrzeuge. Bei einem derartigen Anwendungsfall die in Fahrtrichtung vor dem Kraftfahrzeug befindliche Szene mit der Abtastvorrichtung abgetastet, um vor dem Kraftfahrzeug befindliche Objekte, insbesondere vorausfahrende Fahrzeuge, zu erkennen und die Abstände zu diesen Objekten zu ermitteln. Anhand der ermittelten Abstände wird dann geprüft, ob der Sicherheitsabstand zu einem vorausfahrenden Fahrzeug eingehalten wird und ggf. ein Warnsignal an den Fahrer abgegeben, oder es wird eine automatische Abstandsregelung des Abstands zum vorausfahrenden Fahrzeug vorgenommen.

Mit der Abtastvorrichtung lässt sich auch der bezüglich dem Kraftfahrzeug seitliche Fahrbahnbereich abtasten, um Fahrbahnmarkierungen, die zur Abgrenzung der Fahrspuren auf der Fahrbahn vorgesehen sind, zu erkennen und den Fahrer vor einem Verlassen der Fahrspur zu warnen oder eine automatisch Fahrspurhaltung zu gewährleisten.

## Patentansprüche

1. Abtastvorrichtung mit einem Sendeteil (1), der eine Strahlungsquelle (11) zum Aussenden eines Lichtstrahls (T), ein rotierbares Prisma (10) zum Ablenken des Lichtstrahls (T) und eine Linsenvorrichtung (12) zur Abbildung des abgelenkten Lichtstahls (T) auf eine abzutastende Szene aufweist, **dadurch gekennzeichnet, dass** der Lichtstrahl (T) derart gebündelt ist, dass er die Linsenvorrichtung (12) in einem von der Winkellage (α) des Prismas (10) abhängigen Linsenabschnitt durchdringt, dass die Linsenvorrichtung (12) Linsenabschnitte (120, 121, 122, 123) mit unterschiedlichen Brennweiten aufweist und dass die Brennweiten der Linsenabschnitte (120, 121, 122, 123) derart gewählt sind, dass die Strahlungsquelle (11) jeweils im Brennpunkt des vom Lichtstrahl (T) durchdrungenen Linsenabschnitts (120) liegt.

2. Abtastvorrichtung nach Anspruch 1, **dadurch gekennzeichnet, dass** die Strahlungsquelle (11) bezüglich dem Prisma (10) derart positioniert ist, dass der Lichtstrahl (T) im Prisma (20) durch Totalreflexion zur Linsenvorrichtung (12) abgelenkt wird.

3. Abtastvorrichtung nach Anspruch 1 oder 2, **dadurch gekennzeichnet, dass** die Linsenvorrichtung (12) als Fresnellinse ausgeführt ist.

4. Abtastvorrichtung nach einem der vorherigen Ansprüche, **dadurch gekennzeichnet, dass** die Strahlungsquelle (11) als Laserdiode ausgeführt ist.

5. Abtastvorrichtung nach einem der vorherigen Ansprüche, **dadurch gekennzeichnet, dass** sie einen Empfangsteil (2) mit einem Photodetektor (21), einem dem Prisma (10) des Sendeteils (1) gleichartigen weiteren Prisma (20) und einem der Linsenvorrichtung (12) des Sendeteils (2) gleichartigen weiteren Linsenvorrichtung (22) aufweist, dass die Prismen (10, 20) synchron zueinander um die gleiche Rotationsachse (4) oder um zueinander parallele Rotationsachsen rotierbar sind und dass der Photodetektor (21) derart positioniert ist, dass ein aus dem Lichtstahl (T) resultierender Reflexionsstrahl (R) über die weitere Linsenvorrichtung (22) und das weitere Prisma (21) auf ihn abgebildet wird.

6. Verwendung der Abtastvorrichtung nach einem der vorherigen Ansprüche als Abstandsradar für Kraftfahrzeuge.

## Claims

1. Scanning device having an emitting unit (1), said emitting unit (1) comprising a radiation source (11) for emitting a light beam (T), a rotatable prism (10) for deflecting the light beam (T), and a lens device (12) for projecting the deflected light beam (T) onto a scene to be scanned, **characterized in that** the light beam (T) is focused in such a manner that it penetrates the lens device (12) in a lens portion that is dependent on the relative position (α) of the prism (10), that the lens device (12) comprises lens portions (120, 121, 122, 123) having different focal lengths, and that the focal lengths of the lens portions (120, 121, 122, 123) are selected in such a manner that in each case the radiation source (11) is positioned in the focus of the lens portion (120) penetrated by the light beam (T).

2. Scanning device according to claim 1, **characterized in that** the radiation source (11) is positioned relative to the prism (10) in such a manner that the light beam (T) is deflected in the prism (20) towards the lens device (12) by total reflection.

3. Scanning device according to claim 1 or 2, **characterized in that** the lens device (12) is configured as a Fresnel lens.

4. Scanning device according to any one of the preceding claims, **characterized in that** the radiation source (11) is configured as a laser diode.

5. Scanning device according to any one of the preceding claims, **characterized in that** it comprises a receiving unit (2) with a photodetector (21), with a further prism (20) similar to the prism (10) of the emitting unit (1), and with a further lens device (22) similar to the lens device (12) of the emitting unit (1), that the prisms (10, 20) are synchronously rotatable around the same rotational axis (4) or around rotational axes that are arranged parallel to each other, and that the photodetector (21) is positioned in such a manner that a reflected beam (R) resulting from the light beam (T) is projected onto the photodetector (21) via the further lens device (22) and the further prism (20).

6. Use of the scanning device according to any one of the preceding claims as a headway-control radar for motor vehicles.

## Revendications

1. Dispositif de balayage, ayant une partie émission (1) qui présente une source de rayonnement (11) pour l'émission d'un rayon lumineux (T), un prisme (10) rotatif pour dévier le rayon lumineux (T) et un dispositif de lentille (12) pour reproduire sur une scène à balayer le rayon lumineux (T) dévié, **caractérisé en ce que** le rayon lumineux (T) est concentré de sorte qu'il pénètre dans le dispositif de lentille (12) dans un tronçon de lentille qui dépend de la position angulaire (α) du prisme (10), **en ce que** le dispositif de lentille (12) présente des tronçons de lentille (120, 121, 122, 123) ayant différentes longueurs focales, et **en ce que** les longueurs focales des tronçons de lentille (120, 121, 122, 123) sont choisies de sorte que la source de rayonnement (11) se situe respectivement dans la longueur focale du tronçon de lentille (120) pénétré par le rayon lumineux (T).

2. Dispositif de balayage selon la revendication 1, **caractérisé en ce que** la source de rayonnement (11) est positionnée par rapport au prisme (10) de sorte que le rayon lumineux (T) est dévié dans le prisme (20) par réflexion totale vers le dispositif de lentille (12).

3. Dispositif de balayage selon la revendication 1 ou 2, **caractérisé en ce que** le dispositif de lentille (12) est réalisé en tant que lentille de Fresnel.

4. Dispositif de balayage selon une des revendications précédentes, **caractérisé en ce que** la source de rayonnement (11) est réalisée en tant que diode laser.

5. Dispositif de balayage selon une des revendications précédentes, **caractérisé en ce qu'**il présente une partie réception (2) avec un photodétecteur (21), un autre prisme (20) de même type que le prisme (10) de la partie émission (1), et un autre dispositif de lentille (22) de même type que le dispositif de lentille (12) de la partie émission (1), **en ce que** les prismes (10, 20) sont rotatifs de façon synchronisés l'un avec l'autre autour du même axe de rotation (4) ou autour d'axes de rotation parallèles entre eux, et **en ce que** le photodétecteur (21) est positionné de sorte qu'un rayon de réflexion (R) résultant du rayon lumineux (T) est reproduit sur lui via l'autre dispositif de lentille (22) et l'autre prisme (20).

6. Utilisation du dispositif de balayage selon les revendications précédentes en tant que radar de distance pour véhicules automobiles.
